(19) Europäisches Patentamt
European Patent Office
Office européen des brevets

(11) **EP 3 170 658 B1**

(12) **EUROPEAN PATENT SPECIFICATION**

(45) Date of publication and mention
of the grant of the patent:
**19.06.2019 Bulletin 2019/25**

(51) Int Cl.:
**B32B 15/08** [(2006.01)] **B05D 7/14** [(2006.01)]
**B05D 7/24** [(2006.01)]

(21) Application number: **14897718.4**

(22) Date of filing: **22.07.2014**

(86) International application number:
**PCT/JP2014/003854**

(87) International publication number:
**WO 2016/009466 (21.01.2016 Gazette 2016/03)**

(54) **EXTERIOR BUILDING MATERIAL**

AUSSENBAUMATERIAL

MATÉRIAU DE CONSTRUCTION EXTÉRIEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.07.2014 JP 2014145954**

(43) Date of publication of application:
**24.05.2017 Bulletin 2017/21**

(73) Proprietor: **Nisshin Steel Co., Ltd.
Chiyoda-ku
Tokyo 100-8366 (JP)**

(72) Inventors:
• **OWA, Katsumi
Tokyo 100-8366 (JP)**

• **KAWAHARA, Naho
Tokyo 100-8366 (JP)**
• **UEDA, Koichiro
Tokyo 100-8366 (JP)**

(74) Representative: **Epping - Hermann - Fischer
Patentanwaltsgesellschaft mbH
Schloßschmidstraße 5
80639 München (DE)**

(56) References cited:
**WO-A1-2010/136848        WO-A1-2012/074044
JP-A- 2000 129 172        JP-A- 2004 017 606
JP-A- 2004 255 763        JP-A- 2006 070 255
US-A- 6 017 589**

**Description**

Technical Field

The present invention relates to a colored coated metal sheet and an exterior building material.

Background Art

Colored coated metal sheets are excellent in versatility, designability, durability, and are used for exterior building materials, for example, roof materials, metal sidings. Outermost-layer coating films (colored coating films) in colored coated metal sheets for exterior building materials are constituted of polyester in some cases, since coated metal sheets inexpensive and excellent in processability can be constituted. In addition, the colored coated metal sheets for exterior building materials are usually used outdoors, and thus gradually change in the color tone (undergo color change and fading) of their colored coating films due to irradiation of light such as ultraviolet rays, and as a result, reduce in their designability in some cases.

As countermeasures to suppress the color change and fading, it is known, for example, to constitute a colored coating film using a fluororesin, which hardly causes the deterioration by ultraviolet rays, to blend a ultraviolet absorber in a colored coating film (for example, see PTLS 1 and 2). The use of such countermeasures, however, sometimes increases the production cost of colored coated metal sheets as compared with colored coated metal sheets having a colored polyester coating film. PTL 3 discloses a building material without specifying the glossiness and L value.

Citation List

Patent Literature

    PTL 1
    Japanese Patent Application Laid-Open No. 2012-086505
    PTL 2 Japanese Patent Application Laid-Open No. 2008-149584 PTL 3

International Patent Application WO 2012/74044

Summary of the Invention

Technical Problem

The present invention has an object to provide a colored coated metal sheet and an exterior building material which have a colored polyester coating film, exhibit sufficient coloring and excellent processability, and prevent color change and fading by light irradiation with time of the colored coating film.

Solution to the Problem

The present inventors have investigated the causes of changes in the color tone of colored coating films associated with the light irradiation. Then, the present inventors have measured the degree of color change and fading of colored polyester coating films by a weathering test in which the colored coating films are irradiated with ultraviolet rays using a measure of the color difference (ΔE), and have clarified that with respect to the color change and fading, the increase of the L value in the Lab color space is dominant; and the color change and fading occurs more remarkably in colored coating films having a high initial gloss (the glossiness is 60 or higher, substantially 60 to 100) and a deep color (the initial L value is low, 70 or lower). The present inventors have further confirmed that clear coating films containing no coloring pigments do no change in the surface roughness of the coating films even after the above weathering test.

From these results, the present inventors have clarified that the major cause of the color change and fading is that the polyester of the surface and its vicinity of the colored coating film decomposes by ultraviolet rays and particles of a coloring pigment, an extender pigment are exposed to the surface of the colored coating film to thereby make larger the surface roughness of the colored coating film, and consequently, the optical property (reflection of light) of the colored coating film is affected and the colored coating film is made to look as if blushing. It has further been clarified by an outdoor exposure test and an accelerated weathering test that the color difference due to the color change and fading increases for about 5 years from the start of the exposure (irradiation of ultraviolet rays), but is thereafter held at a nearly constant value.

Then, as a result of exhaustive studies, the present inventors have found that by controlling the particle diameter of a coloring pigment reasonably smaller and additionally controlling the content of the coloring pigment, the color change and fading is remarkably suppressed, and this finding has led to the completion of the present invention.

The present invention relates to an exterior building material according to claim 1. Preferred embodiments are set forth in the subclaims.

Advantageous Effects of the Invention

In the colored coated metal sheet according to the present invention, even when an outermost-layer coating film becomes thin due to photodeterioration of a polyester constituting the coating film and particles in the coating film are exposed, the smoothness of the surface of the coating film is not impaired to such a degree as to affect the coloring of the coating film. Hence, the present invention can provide a colored coated metal sheet and an exterior building material which have a colored polyester coating film, exhibit sufficient coloring and excellent processability, and prevent color change and fading by light irradiation with time of the colored coating film.

Brief Description of the Drawings

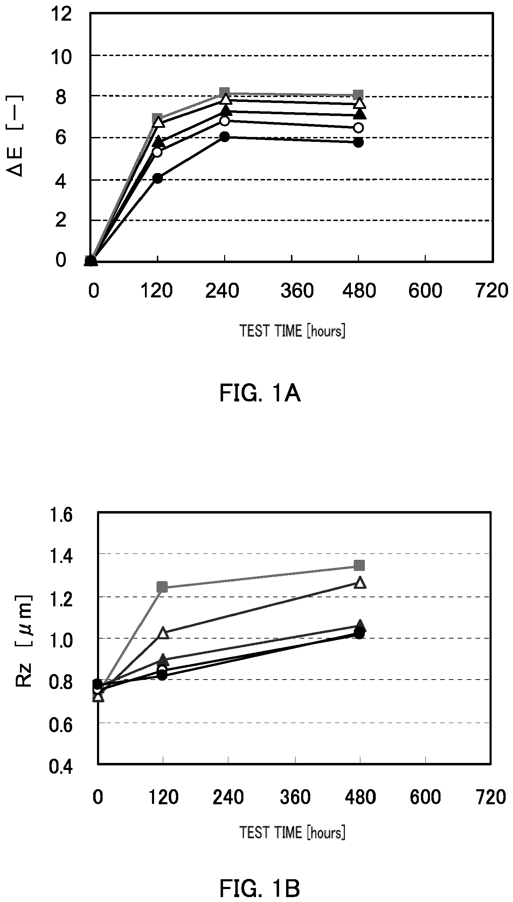

FIG. 1A is a diagram showing relationships between the test time and the color difference ΔE in an accelerated weathering test of samples of coated metal sheets containing coloring pigments having different particle diameters; and FIG. 1B is a diagram showing relationships between the test time and the surface roughness Rz in the accelerated weathering test of the samples of the coated metal sheets.

Description of Embodiments

Hereinafter, a coated metal sheet according to one embodiment of the present invention will be described. The colored coated metal sheet according to the present embodiment has a metal sheet and one or more coating films disposed thereon. Then, the mirror glossiness at 60 degrees of the colored coated metal sheet is 60 to 100; and the L value in the Hunter's Lab color space of the colored coated metal sheet is 70 or lower. The colored coated metal sheet according to the present embodiment refers to a colored coated metal sheet having a high glossiness and a deep color as described above.

The glossiness can be measured by a commercially available glossmeter (for example, "VG-2000" manufactured by Nippon Denshoku Industries Co., Ltd.), and can be regulated, for example, by the content of a gloss adjusting agent in an outermost-layer coating film to be described later.

Further the L value can be determined by a calculation by the Hunter's color and an exterior building material which have a colored polyester coating film, exhibit sufficient coloring and excellent processability, and prevent color change and fading by light irradiation with time of the colored coating film.

Brief Description of the Drawings

FIG. 1A is a diagram showing relationships between the test time and the color difference ΔE in an accelerated weathering test of samples of coated metal sheets containing coloring pigments having different particle diameters; and FIG. 1B is a diagram showing relationships between the test time and the surface roughness Rz in the accelerated weathering test of the samples of the coated metal sheets.

Description of Embodiments

Hereinafter, a coated metal sheet according to one embodiment of the present invention will be described. The colored coated metal sheet according to the present embodiment has a metal sheet and one or more coating films disposed thereon. Then, the mirror glossiness at 60 degrees of the colored coated metal sheet is 60 to 100; and the L value in the Hunter's Lab color space of the colored coated metal sheet is 70 or lower. The colored coated metal sheet according to the present embodiment refers to a colored coated metal sheet having a high glossiness and a deep color as described above.

The glossiness can be measured by a commercially available glossmeter (for example, "VG-2000" manufactured by Nippon Denshoku Industries Co., Ltd.), and can be regulated, for example, by the content of a gloss adjusting agent in an outermost-layer coating film to be described later.

Further the L value can be determined by a calculation by the Hunter's color difference formula from the measurement result using a commercially available spectrocolorimeter (for example, "CM3700d" manufactured by Konica Minolta Optics, Inc.), and can be regulated, for example, by the type and the content of a coloring pigment in an outermost-layer coating film to be described later.

The metal sheet can be selected from well-known metal sheets as far as the effect of the present embodiment can be attained. Examples of the metal sheet include cold-rolled steel sheets, galvanized steel sheets, Zn-Al alloy-plated steel sheets, Zn-Al-Mg alloy-plated steel sheets, aluminum-plated steel sheets, stainless steel sheets (including austenite, martensite, ferrite, and ferrite-martensite two-phase stainless steel sheets), aluminum plates, aluminum alloy plates and copper plates. The metal sheet is preferably a plated steel sheet from the viewpoint of the corrosion resistance, the weight reduction and the cost efficiency. The plated steel sheet is, particularly from the viewpoint of the corrosion resistance, the suitability as exterior building materials, preferably a hot-dip 55% Al-Zn alloy-plated steel sheet, a Zn-Al-Mg alloy-plated steel sheet or an aluminum-plated steel sheet.

The coating film may be a single coating film or may be a laminate of a plurality of coating films. The outermost-layer coating film among the coating films is constituted of a polyester. The outermost-layer coating film is, in the case where the coating film is a single coating film, the single coating film itself, and in the case where the coating film is the laminate, a coating film, constituting the surface of the colored coated metal sheet, in the laminate. In the present embodiment, the polyester includes modified polyesters. Examples of the modified polyester include urethane-modified copolymerized polyester resins (polyester urethane). The thickness of the outermost-layer coating film is, for example, 8 to 25 $\mu$m.

The outermost-layer coating film contains particles containing a coloring pigment. The coloring pigment may be an inorganic pigment, an organic pigment or both. Examples of the inorganic pigment include titanium oxide, carbon black, Iron Black, Iron Oxide Yellow, Titanium Yellow, colcothar, Prussian Blue, Cobalt Blue, Cerulean Blue, Ultramarine Blue, Cobalt Green, Molybdenum Red, and composite oxide calcined pigments (composite oxide particles) containing metal components such as iron-based composite oxides. Examples of the metal component include CoAl, CoCrAl, CoZnAl, CoMnAl, CoCrZnMgAl, CoNiZnTi, CoCrZnTi, NiSbTi, CrSbTi, FeCrZnNi, MnSbTi, FeCr, FeZn, FeZnCr, FeZn-CrAl, FeTi, FeTiZn, FeMn, FeCuMn, FeMnCo, FeCoCr, FeCrNi, FeNi, FeCrNiMn, CoCr, and SnZnTi.

Examples of the organic pigment include Quinacridone Red, Perylene Red, Lithol Red B, Brilliant Scarlet G, Pigment Scarlet 3B, Brilliant Carmine 6B, Lake Red C, Lake Red D, Permanent Red 4R, Bordeaux 10B, Fast Yellow G, Fast Yellow 10G, Para Red, Watching Red, Benzidine Yellow, Benzidine Orange, Bon Maroon L, Bon Maroon M, Brilliant Fast Scarlet, Vermilion Red, Phthalocyanine Blue, Phthalocyanine Green, Fast Sky Blue, and Aniline Black.

The particle may be the coloring pigment alone, or may contain other particles other than the coloring pigment as far as the glossiness and L value of the colored coated metal sheet are satisfied. Examples of the other particles include extender pigments; and examples of the extender pigments include barium sulfate, calcium carbonate and titanium oxide. The content of the extender pigment in the outermost-layer coating film is, for example, 0.1 to 15vol%.

Particularly the incorporation of one or more selected from the group consisting of iron oxide particles, titanium oxide particles, composite oxide particles, barium sulfate particles and calcium carbonate particles is preferable from the viewpoint of the chemical stability such as water resistance, and the cost.

The $D_{90}$ of the particle is 0,07 to 0.70 $\mu$m. The $D_{90}$ refers to a particle diameter at 90% in a cumulative distribution of the particle diameter in terms of the number of particles. When the $D_{90}$ of the particle is larger than 0.70 $\mu$m, the surface roughness of the outermost-layer coating film becomes large as the photodeterioration of the outermost-layer coating film occurs, and the luminosity in the color tone of the outermost-layer coating film rises, which may impair the designability of the colored coated metal sheet. By contrast, when the $D_{90}$ of the particle is smaller than 0,07 $\mu$m, the coloring of the outermost-layer coating film becomes insufficient in some cases.

The $D_{90}$ of the particle is 0,07 $\mu$m or larger from the viewpoint of sufficient coloring of the outermost-layer coating film; and the $D_{90}$ is preferably 0.50 $\mu$m or smaller, and more preferably 0.4 $\mu$m or smaller, from the viewpoint of suppressing the loss of the designability due to the photodeterioration of the outermost-layer coating film.

Further the $D_{10}$ of the particle is 0,03 $\mu$m or larger from the viewpoint of securing sufficient productivity of the colored coated metal sheet. When the $D_{10}$ is smaller than 0,03 $\mu$m, there are such problems that the cost increases due to the elongation of the dispersing time of the particle in a coating material for the coating film, that the particle in the coating material becomes liable to aggregate because of the increase in the interparticle attraction force due to the enlargement of the surface area of the particle, and the storage stability of the coating material decreases, that the viscosity of the coating material increases due to the increase in the oil absorption of the coloring pigment as the particle, that the costs for crushing and classifying the particle increase.

The $D_{90}$ and the $D_{10}$ of the particle in the outermost-layer coating film can be determined from a measurement result of the particle diameter (for example, the maximum diameter) of the particle in the outermost-layer coating film or its cross-section. Further in the case of producing the colored coated metal sheet, the $D_{90}$ and the $D_{10}$ can be determined also from a measurement result of the particle diameter of the particle in a coating material for the outermost-layer coating film, for example, by an image analysis method and the Coulter method (for example, using an accurate particle size distribution analyzer "Multisizer 4", manufactured by Beckman Coulter, Inc.). The $D_{90}$ and the $D_{10}$ in the coating material can be regarded as substantially identical to the $D_{90}$ and the $D_{10}$ in the coating film. Further the $D_{90}$ and the

$D_{10}$ of the particle can be regulated, for example, by classification of the particle or mixing of classified products thereof.

The content of the particle in the outermost-layer coating film is 10 to 60mass%. When the content is lower than 10mass%, the coloring of the outermost-layer coating film becomes insufficient in some cases; and when the content is higher than 60mass%, the processability of the colored coated metal sheet becomes insufficient in some cases. The content can be measured by a measurement of the ash content of the outermost-layer coating film, an observation of the particle present in the outermost-layer coating film or its cross-section.

Then, the particle may contain particles larger than the $D_{90}$ (such particles are referred also particularly as "coarse particles") as far as the $D_{90}$ of the particle is 0,07 to 0.70 $\mu$m, and the mirror glossiness at 60 degrees of the colored coated metal sheet is 60 to 100. This is because though depending on the size of the coarse particles, as far as the $D_{90}$ becomes 0.70 $\mu$m at the largest, the content of the coarse particles in the outermost-layer coating film is sufficiently low, and when the coarse particles are dispersed in the coating film, even if the coarse particles cause fine ruggedness on the surface of the coating film, the designability of the coating film is not substantially affected.

It is preferable that the content of the coarse particles be lower from the viewpoint of suppressing the decrease in the designability due to the above-mentioned photodeterioration; for example, in the outermost-layer coating film, the content is preferably 5mass% or lower, more preferably 2mass% or lower, and still more preferably 1mass% or lower.

Further it is preferable that the particle diameter of the coarse particles be smaller from the viewpoint of suppressing the decrease in the designability due to the above-mentioned photodeterioration; for example, with the film thickness of the outermost-layer coating film being represented as T, the particle diameter is preferably smaller than T, more preferably 0.7T or smaller, still more preferably 0.5T or smaller, further still more preferably 0.3T or smaller, and further still more preferably 0.1T or smaller.

The content and the particle diameter of the coarse particles can be determined by the same methods as in the case of the above-mentioned particle.

Examples of the coarse particles include gloss adjusting agents. The gloss adjusting agents may be microporous particles or may be primary particles. The microporous particles refer to particles having closed or open micropores at least on their surface, and are, for example, aggregates in which primary particles are chemically joined, agglomerates in which primary particles are physically joined, or porous particles. Examples of the microporous particles include silica particles, calcium carbonate particles, barium sulfate particles, polyacrylonitrile particles and calcium carbonate-calcium phosphate composite particles.

Further the primary particles are particles having no micropores at least on their surface, and examples thereof include primary particles (resin particles) composed of resins such as acrylic resins, polyurethane resins, polyester resins, melamine resins, urea resins, or polyamide resins, and primary particles (inorganic particles) composed of inorganic compounds such as glass, silicon carbide, boron nitride, zirconia, or alumina·silica.

The particle diameter of the gloss adjusting agent is usually about 2 to 7 $\mu$m, and the content of the gloss adjusting agent in the outermost-layer coating film is, for example, 2mass% or lower.

The outermost-layer coating film may contain additional components other than the resin and the particles as far as the effect of the present embodiment can be attained. Examples of the other components include ultraviolet absorbers, light stabilizers, hydrophilizing agents, and lubricants.

In the coated metal sheet, although the effect of preventing the color change and fading due to the photodeterioration can be sufficiently attained even when the outermost-layer coating film does not contain an ultraviolet absorber or a light stabilizer, the use of the ultraviolet absorber and the light stabilizer is preferable from the viewpoint of improving the weather resistance of the outermost-layer coating film, and the content thereof in the coating film is, for example, 2mass% or lower.

Further the use of the hydrophilizing agent is preferable from the viewpoint of suppressing rain streak stains in the outermost-layer coating film, and the content thereof in the coating film is, for example, 10mass% or lower. Examples of the hydrophilizing agent include partially hydrolyzed condensates of tetraalkoxysilanes.

Further the use of the lubricant is preferable from the viewpoint of enhancing the processability of the colored coated metal sheet, for example, preventing generation of galling in the outermost-layer coating film. Examples of the lubricant include organic waxes such as fluorine-based waxes, polyethylene-based waxes, styrene-based waxes and polypropylene-based waxes, and inorganic lubricants such as molybdenum disulfide and talc. The content of the lubricant in the outermost-layer coating film is, for example, 0 to 5mass%.

The coating film may further contain coating films other than the outermost-layer coating film as far as the effect of the present embodiment can be attained. Examples of the other coating films include an undercoat coating film.

The undercoat coating film is generally disposed between the metal sheet and other coating film (for example, the above outermost-layer coating film) in order to enhance the adhesiveness of the metal sheet with the other coating film. Besides, various functions such as corrosion resistance can be imparted to the undercoat coating film. The film thickness of the undercoat coating film is, for example, 1 to 10 $\mu$m.

The undercoat coating film is constituted of a resin. Examples of the resin include epoxy resins, polyesters, epoxy-modified polyester resins, acryl resins and phenoxy resins.

The undercoat coating film may further contain additives such as an anti-rust pigment, a coloring pigment and a metallic pigment. Examples of the anti-rust pigment include non-chromium-based anti-rust pigments such as modified silica, vanadate salts, magnesium hydrogenphosphate, magnesium phosphate, zinc phosphate and aluminum polyphosphate, and chromium-based anti-rust pigments such as strontium chromate, zinc chromate, calcium chromate and barium chromate.

Examples of the coloring pigment include titanium oxide, carbon black, chromium oxide, iron oxide, colcothar, Titanium Yellow, Cobalt Blue, Cobalt Green, Aniline Black, and Phthalocyanine Blue. Examples of the metallic pigments include aluminum flakes, bronze flakes, copper flakes, stainless steel flakes, nickel flakes, and titanium flakes. Examples of the extender pigments include barium sulfate, titanium oxide, silica and calcium carbonate.

The content of the additives in the undercoat coating film can suitably be determined as far as the effect of the present embodiment can be attained, and for example, the content of the anti-rust pigment in the undercoat coating film is preferably 10 to 70vol%.

The coated metal sheet may further have other constitution other than the above metal sheet and the above coating film as far as the effect of the present embodiment can be attained. Examples of the other constitution include chemical conversion film layers.

The chemical conversion film layer is generally disposed on the surface of the metal sheet between the metal sheet and the coating film in order to enhance the corrosion resistance of the colored coated metal sheet. The chemical conversion film layer may be a chromate-containing layer or may be a chromate-free layer.

Here, the "chromate-free" means containing substantially no hexavalent chromium. Being "chromate-free" can be confirmed, for example, in such a procedure that a measurement object (for example, a metal sheet having the chromate-free layer) is immersed in 100 mL of boiling pure water for 10 min; thereafter, when hexavalent chromium having eluted in the pure water is quantitatively determined by an analysis method of the concentration thereof according to the "diphenylcarbazide colorimetric method" of JIS H8625, Annex 2.4.1, the concentration thereof is equal to or lower than the detection limit.

Examples of the chromate-containing layer include chromate-based films and phosphoric acid-chromic acid-based films. The deposition amount of the chromate-containing layer in the metal sheet is, from the above viewpoint, for example, preferably 20 to 80 mg/m$^2$ in terms of chromium element.

Examples of the chromate-free layer include Ti-Mo composite films, fluoro acid-based films, phosphate films, resin-based films, resin and silane coupling agent-based films, silica-based films, silica and silane coupling agent-based films, zirconium-based films, and zirconium and silane coupling agent-based films.

For example, from the above viewpoint, the deposition amount of the Ti-Mo composite film in the metal sheet is preferably 10 to 500 mg/m$^2$ in terms of total of Ti and Mo; the deposition amount of the fluoro acid-based film is preferably 3 to 100 mg/m$^2$ in terms of fluorine or total of metal elements; and the deposition amount of the phosphate-based film is preferably 0.1 to 5 g/m$^2$ in terms of phosphorus element.

Further from the above viewpoint, the deposition amount of the resin-based film in the metal sheet is preferably 1 to 500 mg/m$^2$ in terms of resin; the deposition amount of the resin and silane coupling agent-based film is preferably 0.1 to 50 mg/m$^2$ in terms of Si; and the deposition amount of the silica-based film is preferably 0.1 to 200 mg/m$^2$ in terms of Si.

Further from the above viewpoint, the deposition amount of the silica and silane coupling agent-based film in the metal sheet is preferably 0.1 to 200 mg/m$^2$ in terms of Si; the deposition amount of the zirconium-based film is preferably 0.1 to 100 mg/m$^2$ in terms of Zr; and the deposition amount of the zirconium and silane coupling agent-based film is preferably 0.1 to 100 mg/m$^2$ in terms of Zr.

Here, the colored coated metal sheet does not contain extra-large particles larger than the coarse particle, which form fine ruggedness on the surface of the outermost-layer coating film, or does not have the metal sheet or undercoat coating film having such a surface roughness as to form the ruggedness. Examples of the extra-large particles include matting agents (particles of an aggregate) to be used for matting of coated metal sheets; and its particle diameter is, for example, 2.0T or larger. Further the surface roughness of the coated metal sheet which does not cause the ruggedness to be formed is, for example, 10 $\mu$m or smaller in Rz.

The colored coated metal sheet can be fabricated by utilizing a well-known method. The colored coated metal sheet can be fabricated, for example, by applying a chemical conversion liquid on the metal sheet to thereby fabricate the chemical conversion film layer, applying an undercoat coating material on the chemical conversion film layer to thereby fabricate the undercoat coating film, and applying an overcoat coating material on the undercoat coating film to thereby fabricate an overcoat coating film. The overcoat coating film is the above-mentioned outermost-layer coating film.

The chemical conversion film layer is fabricated, for example, by applying the aqueous chemical conversion liquid on the surface of the metal sheet by a well-known method such as a roll coat method, a spin coat method or a spray method, and drying the metal sheet after the application without washing with water. The drying temperature and the drying time are, from the viewpoint of the productivity, preferably, for example, 60 to 150°C in terms of the attained temperature of the metal sheet, and 2 to 10 sec.

The undercoat coating film is fabricated, for example, by applying the undercoat coating material in an application amount to give a dry film thickness of 1 to 10 $\mu$m (preferably 3 to 7 $\mu$m) on the metal sheet or the chemical conversion film layer by a well-known method such as roll coat, curtain flow coat, spray coat or dip coat, and baking the coating material. The baking temperature is, for example, 180 to 240°C in terms of the attained temperature of the metal sheet.

The undercoat coating material is a coating material for the undercoat coating film. The undercoat coating material may further contain, other than the above-mentioned materials for the undercoat coating film, a solvent, a crosslinking agent. Examples of the solvent include hydrocarbons such as toluene and xylene; esters such as ethyl acetate and butyl acetate; ethers such as cello solve; and ketones such as methyl isobutyl ketone, methyl ethyl ketone, isophorone and cyclohexanone.

The crosslinking agent is a component for crosslinking the above-mentioned resin in the undercoat coating material. Examples of the crosslinking agent include melamine compounds, isocyanate compounds and concurrent use of melamine compounds and isocyanate compounds. Examples of the melamine compounds include imino group-type, methylolimino group-type, and methylol group- or completely alkyl group-type melamine compounds. The isocyanate compound may be any of aromatic, aliphatic and alicyclic, and examples thereof include m-xylene diisocyanate, hexamethylene diisocyanate, naphthalene diisocyanate, isophorone diisocyanate, and blocked compounds thereof.

The under coating material is prepared, for example, by homogeneously mixing and dispersing the above-mentioned materials of the under coating material.

The overcoat coating film is fabricated, for example, by applying the overcoat coating material by well-known methods on the metal sheet, the chemical conversion film layer or the undercoat coating layer, and drying or baking the applied coating material. The temperature of the drying or the baking is, for example, 180 to 240°C in terms of the attained temperature of the metal sheet.

The overcoat coating material refers to a coating material for the overcoat coating film. The overcoat coating material may further contain other components other than the above-mentioned materials of the overcoat coating film as far as the effect of the present embodiment can be attained. Examples of the other components include curing agents and curing catalysts. The curing agent is a component for crosslinking the polyester in the overcoat coating material, and the above-mentioned crosslinking agent can be used therefor. The content of the curing agent in the overcoat coating film is, for example, 10 to 30vol%. The curing catalyst is added to the overcoat coating material, for example, as far as the storage stability of the overcoat coating material is not affected.

The colored coated metal sheet is suitably used as materials for exterior building materials. The exterior building materials can be fabricated by processing the colored coated metal sheet by well-known methods. The exterior building materials are fabricated, for example, by forming the colored coated metal sheet by well-known processing such as bending, drawing, bulging, embossing or roll-forming. Here, the "exterior building materials" means members to be used for parts exposed to the outside atmosphere and possibly irradiated with sun light or its reflection light, such as roofs, walls, accessories, signboards and outdoor equipment.

The exterior building materials may further contain other constitutions as far as the above effect can be attained. The exterior building materials may further have, for example, constitutions to be provided for installation pertinent to practical use of the exterior building materials. Examples of such constitutions include members to fix exterior building materials to buildings, members to connect between exterior building materials, marks to indicate the direction in installation of exterior building materials, and foamed sheets and foamed layers to improve the heat insulation. These constitutions may be included in the colored coated metal sheet for exterior building materials.

The outermost-layer coating film (overcoat coating film) of the colored coated metal sheet contains a sufficient amount of small-particle diameter particles containing a coloring pigment; and the particles are dispersed uniformly in both directions of the thickness direction and the plane direction of the outermost-layer coating film. Since the particle diameter of the particles is sufficiently small, the surface of the outermost-layer coating film is smooth and assumes a sufficiently high glossiness. Further since the content of the particles is sufficient, the outermost-layer coating film sufficiently colors and assumes a desired color tone.

When the colored coated metal sheet is irradiated with sun light, the polyester constituting the outermost-layer coating film gradually decomposes due to ultraviolet rays in the sun light, and the outermost-layer coating film gradually becomes lean (photodeteriorated) from its surface side. In the course of the photodeterioration, the particles dispersed in the outermost-layer coating film are gradually exposed on the surface of the outermost-layer coating film.

As described above, since the particle diameter of the particles is sufficiently small, the smoothness of the surface of the outermost-layer coating film does not substantially vary and the appearance (color tone) of the coating film either does not substantially vary, even if the particles are exposed. Then, the exposure amount of the particles due to the photodeterioration, since the particles are dispersed homogeneously in the outermost-layer coating film, becomes nearly constant when the photodeterioration progresses to some degree. Hence, the smoothness of the surface of the outermost-layer coating film in such a degree that the color tone does not substantially vary is maintained also thereafter. Therefore, the color change and fading of the outermost-layer coating film does not substantially occur in the above photodeterioration, and the desired designability of the colored coated metal sheet is held over a long period.

As is clear from the above description, the colored coated metal sheet has a metal sheet and one or more coating films disposed thereon, and has a mirror glossiness at 60 degrees of 60 to 100 and an L value in the Hunter's Lab color space of 70 or lower; the outermost-layer coating film among the coating films is constituted of a polyester, contains particles containing a coloring pigment, and has a $D_{90}$ of the particles of 0.05 to 0.70 $\mu$m and a content of the particles in the outermost-layer coating film of 10 to 60mass%. Hence, the colored coated metal sheet has a polyester resin-made colored coating film, assumes sufficient coloring and excellent processability, and can prevent the color change and fading due to light irradiation with time of the colored coating film.

Further it is more effective, from the viewpoint of sufficient coloring of the outermost-layer coating film, that the $D_{90}$ of the particles is 0,07 to 0.50 $\mu$m and it is still more effective, from the above viewpoint, that the $D_{90}$ of the particles is 0,07 to 0.40 $\mu$m.

Further it is still more effective, from the viewpoint of securing sufficient productivity of the colored coated metal sheet, that the $D_{10}$ of the particles is 0,03 $\mu$m or larger.

Further it is still more effective, from the viewpoint of the long-term stability of desired coloring in the outermost-layer coating film, that the coloring pigment is an inorganic pigment.

Further it is still more effective, from the viewpoint of the chemical stability such as the water resistance and the cost, that the particles contain one or more selected from the group consisting of iron oxide particles, titanium oxide particles, composite oxide particles, barium sulfate particles and calcium carbonate particles.

Further it is still more effective, from the viewpoint of enhancing the corrosion resistance of the colored coated metal sheet, that the colored coated metal sheet further has a chemical conversion film layer disposed on the surface of the metal sheet.

Further the colored coated metal sheet can be used suitably in applications of exterior building materials, and the exterior building materials constituted of the colored coated metal sheet can prevent the color change and fading due to the light irradiation with time of the colored coating film.

Hereinafter, the present invention will be described in detail by reference to Examples, but the present invention is not limited to these Examples.

Examples

[Preparation of Overcoat Coating Material 1]

The following components were mixed in the following amounts to thereby obtain overcoat coating material 1. The $D_{10}$ of iron oxide (IO) particle 1 was 0.01 $\mu$m, and the $D_{90}$ thereof was 0.04 $\mu$m. Further the following polyester-based clear coating material (PE) was "CA clear coating material", manufactured by Nippon Fine Coatings, Inc. The particle size distribution in terms of the number of particles of the particle in overcoat coating material 1 was determined by using a laser diffraction particle size distribution analyzer ("SALD-7100", manufactured by Shimadzu Corp.); and the $D_{10}$ was 0.01 $\mu$m, and the $D_{90}$ was 0.04 $\mu$m. Here, the content of the particle (iron oxide particle 1) was a proportion of the solid content in the overcoat coating material to the total amount thereof, and the same was applied to the following Examples.

| | |
|---|---|
| Iron oxide particle 1 | 30mass% |
| Polyester-based clear coating material | balance |

[Preparation of Overcoat Coating Materials 2 to 9]

Overcoat coating materials 2 to 9 were obtained as in overcoat coating material 1, except for altering iron oxide particle 1 to iron oxide particles 2 to 9, respectively. The $D_{10}$ of iron oxide particle 2 was 0.03 $\mu$m, and the $D_{90}$ thereof was 0.07 $\mu$m. The $D_{10}$ of iron oxide particle 3 was 0.07 $\mu$m, and the $D_{90}$ thereof was 0.18 $\mu$m. The $D_{10}$ of iron oxide particle 4 was 0.12 $\mu$m, and the $D_{90}$ thereof was 0.27 $\mu$m. The $D_{10}$ of iron oxide particle 5 was 0.17 $\mu$m, and the $D_{90}$ thereof was 0.35 $\mu$m. The $D_{10}$ of iron oxide particle 6 was 0.24 $\mu$m, and the $D_{90}$ thereof was 0.48 $\mu$m. The $D_{10}$ of iron oxide particle 7 was 0.39 $\mu$m, and the $D_{90}$ thereof was 0.65 $\mu$m. The $D_{10}$ of iron oxide particle 8 was 0.48 $\mu$m, and the $D_{90}$ thereof was 0.79 $\mu$m. The $D_{10}$ of iron oxide particle 9 was 0.008 $\mu$m, and the $D_{90}$ thereof was 0.07 $\mu$m.

Further, the $D_{10}$ of the particle in overcoat coating material 2 was 0.03 $\mu$m, and the $D_{90}$ thereof was 0.07 $\mu$m. The $D_{10}$ of the particle in overcoat coating material 3 was 0.07 $\mu$m, and the $D_{90}$ thereof was 0.18 $\mu$m. The $D_{10}$ of the particle in overcoat coating material 4 was 0.12 $\mu$m, and the $D_{90}$ thereof was 0.27 $\mu$m. The $D_{10}$ of the particle in overcoat coating material 5 was 0.17 $\mu$m, and the $D_{90}$ thereof was 0.35 $\mu$m. The $D_{10}$ of the particle in overcoat coating material 6 was 0.24 $\mu$m, and the $D_{90}$ thereof was 0.48 $\mu$m. The $D_{10}$ of the particle in overcoat coating material 7 was 0.39 $\mu$m, and the $D_{90}$ thereof was 0.65 $\mu$m. The $D_{10}$ of the particle in overcoat coating material 8 was 0.48 $\mu$m, and the $D_{90}$ thereof

was 0.79 $\mu$m. The $D_{10}$ of the particle in overcoat coating material 9 was 0.008 $\mu$m, and the $D_{90}$ thereof was 0.07 $\mu$m.

[Preparation of Overcoat Coating Materials 10 to 13]

Overcoat coating materials 10 to 13 were obtained in a similar manner to overcoat coating material 3, except for altering the content of iron oxide particle 3 to 8, 15, 55 and 70mass%, respectively. The $D_{10}$ of the particle in any of overcoat coating materials 10 to 13 was 0.07 $\mu$m, and the $D_{90}$ thereof was 0.18 $\mu$m.

[Preparation of Overcoat Coating Materials 14 to 17]

Overcoat coating materials 14 to 17 were obtained in a similar manner to overcoat coating material 3, except for altering the content of iron oxide particle 3 to 5mass%, and further containing 25mass% of titanium oxide (TO) particles 1 to 4, respectively. The $D_{10}$ of titanium oxide particle 1 was 0.006 $\mu$m, and the $D_{90}$ thereof was 0.03 $\mu$m. The $D_{10}$ of titanium oxide particle 2 was 0.08 $\mu$m, and the $D_{90}$ thereof was 0.15 $\mu$m. The $D_{10}$ of titanium oxide particle 3 was 0.25 $\mu$m, and the $D_{90}$ thereof was 0.47 $\mu$m. The $D_{10}$ of titanium oxide particle 4 was 0.32 $\mu$m, and the $D_{90}$ thereof was 2.75 $\mu$m.
Further, the $D_{10}$ of the particle in overcoat coating material 14 was 0.008 $\mu$m, and the $D_{90}$ thereof was 0.16 $\mu$m. The $D_{10}$ of the particle in overcoat coating material 15 was 0.09 $\mu$m, and the $D_{90}$ thereof was 0.22 $\mu$m. The $D_{10}$ of the particle in overcoat coating material 16 was 0.11 $\mu$m, and the $D_{90}$ thereof was 0.41 $\mu$m. The $D_{10}$ of the particle in overcoat coating material 17 was 0.25 $\mu$m, and the $D_{90}$ thereof was 2.58 $\mu$m.

[Preparation of Overcoat Coating Materials 18 and 19]

Overcoat coating material 18 was obtained in a similar manner to overcoat coating material 15, except for altering the content of iron oxide particle 3 to 3mass%, and altering the content of titanium oxide particle 2 to 4mass%. Further, overcoat coating material 19 was obtained in a similar manner to in overcoat coating material 15, except for altering the content of iron oxide particle 3 to 30mass%, and altering the content of titanium oxide particle 2 to 40mass%. The $D_{10}$ of the particle in either of overcoat coating materials 18 and 19 was 0.08 $\mu$m, and the $D_{90}$ thereof was 0.17 $\mu$m.

[Preparation of Overcoat Coating Material 20]

Overcoat coating material 20 was obtained in a similar manner to in overcoat coating material 14, except for altering the content of iron oxide particle 3 to 30mass%, and altering the content of titanium oxide particle 1 to 0.2mass%. The $D_{10}$ of the particle in overcoat coating material 20 was 0.02 $\mu$m, and the $D_{90}$ thereof was 0.14 $\mu$m.

[Preparation of Overcoat Coating Material 21]

Overcoat coating material 21 was obtained in a similar manner to overcoat coating material 3, except for further containing 2mass% of a silica (SI) particle. The $D_{10}$ of the silica particle was 1.00 $\mu$m, and the $D_{90}$ thereof was 2.50 $\mu$m. The $D_{10}$ of the particle in overcoat coating material 21 was 0.02 $\mu$m, and the $D_{90}$ thereof was 0.22 $\mu$m.

[Preparation of Overcoat Coating Materials 22 to 24]

Overcoat coating materials 22 to 24 were obtained in a similar manner to overcoat coating material 3, except for altering the content of iron oxide particle 3 to 5mass%, and further containing 25mass% of iron-based composite oxide (ICO) particles 1 to 3, respectively.
The metal component of iron-based composite oxide particle 1 was Fe-Zn; and the $D_{10}$ thereof was 0.16 $\mu$m, and the $D_{90}$ thereof was 0.37 $\mu$m. The metal component of iron-based composite oxide particle 2 was Fe-Cu-Mn; and the $D_{10}$ thereof was 0.22 $\mu$m, and the $D_{90}$ thereof was 0.58 $\mu$m. The metal component of iron-based composite oxide particle 3 was Fe-Zn-Cr; and the $D_{10}$ thereof was 0.45 $\mu$m, and the $D_{90}$ thereof was 1.20 $\mu$m.
Further, the $D_{10}$ of the particle in overcoat coating material 22 was 0.13 $\mu$m, and the $D_{90}$ thereof was 0.35 $\mu$m. The $D_{10}$ of the particle in overcoat coating material 23 was 0.14 $\mu$m, and the $D_{90}$ thereof was 0.52 $\mu$m. The $D_{10}$ of the particle in overcoat coating material 24 was 0.14 $\mu$m, and the $D_{90}$ thereof was 1.15 $\mu$m.

[Preparation of Overcoat Coating Materials 25 and 26]

Overcoat coating materials 25 and 26 were obtained in a similar manner to in overcoat coating material 3, except for altering the content of iron oxide particle 3 to 20mass%, and further containing 10mass% of barium sulfate (BS) particles 1 and 2, respectively. The $D_{10}$ of barium sulfate particle 1 was 0.11 $\mu$m, and the $D_{90}$ thereof was 0.24

μm. The $D_{10}$ of barium sulfate particle 2 was 0.33 μm, and the $D_{90}$ thereof was 0.90 μm. Further, the $D_{10}$ of the particle in overcoat coating material 25 was 0.09 μm, and the $D_{90}$ thereof was 0.22 μm. The $D_{10}$ of the particle in overcoat coating material 26 was 0.13 μm, and the $D_{90}$ thereof was 0.75 μm.

[Preparation of Overcoat Coating Materials 27 and 28]

Overcoat coating materials 27 and 28 were obtained in a similar manner to overcoat coating material 3, except for altering the content of iron oxide particle 3 to 20mass%, and further containing 10mass% of calcium carbonate (CC) particles 1 and 2, respectively. The $D_{10}$ of calcium carbonate particle 1 was 0.21 μm, and the $D_{90}$ thereof was 0.38 μm. The $D_{10}$ of calcium carbonate particle 2 was 0.52 μm, and the $D_{90}$ thereof was 1.85 μm. Further, the $D_{10}$ of the particle in overcoat coating material 27 was 0.12 μm, and the $D_{90}$ thereof was 0.26 μm. The $D_{10}$ of the particle in overcoat coating material 28 was 0.14 μm, and the $D_{90}$ thereof was 1.65 μm.

[Preparation of Overcoat Coating Material 29]

Overcoat coating material 29 was obtained in a similar manner to overcoat coating material 1, except for using a quinacridone (Qui) particle in place of iron oxide particle 1. The quinacridone particle was a secondary particle; and the $D_{10}$ thereof was 0.03 μm, and the $D_{90}$ thereof was 0.15 μm. The $D_{10}$ of the particle in overcoat coating material 29 was 0.03 μm, and the $D_{90}$ thereof was 0.15 μm.

[Preparation of Overcoat Coating Material 30]

Overcoat coating material 30 was obtained in a similar manner to overcoat coating material 15, except for using 20mass% of a Phthalocyanine Blue (Pht) particle in place of iron oxide particle 1, and altering the content of titanium oxide particle 2 to 10mass%. The Phthalocyanine Blue particle was a secondary particle; and the $D_{10}$ thereof was 0.03 μm, and the $D_{90}$ thereof was 0.18 μm. The $D_{10}$ of the particle in overcoat coating material 30 was 0.05 μm, and the $D_{90}$ thereof was 0.16 μm.

[Preparation of Overcoat Coating Material 31]

Overcoat coating material 31 was obtained in a similar manner to overcoat coating material 15, except for using 20mass% of a perylene (Per) particle in place of iron oxide particle 1, and altering the content of titanium oxide particle 2 to 10mass%. The perylene particle was a secondary particle; and the $D_{10}$ thereof was 0.45 μm, and the $D_{90}$ thereof was 1.20 μm. The $D_{10}$ of the particle in overcoat coating material 31 was 0.16 μm, and the $D_{90}$ thereof was 0.80 μm.

[Preparation of Overcoat Coating Material 32]

Overcoat coating material 32 was obtained in a similar manner to overcoat coating material 3, except for using a polyester urethane-based clear coating material (PEU) in place of the polyester-based clear coating material. The polyester urethane-based clear coating material was "HD6000", manufactured by BASF Japan. The $D_{10}$ of the particle in overcoat coating material 32 was 0.07 μm, and the $D_{90}$ thereof was 0.18 μm.

Kinds of the resins, and kinds of particles, particle diameters and contents of the particles in overcoat coating materials 1 to 32 are shown in Table 1 and Table 2.

[Table 1]

Table 1

| Overcoat Coating Material No. | Resin | Particle 1 | | | | Particle 2 | | | | Particle | | |
|---|---|---|---|---|---|---|---|---|---|---|---|---|
| | | Kind | $D_{10}$ ($\mu$m) | $D_{90}$ ($\mu$m) | Content (mass%) | Kind | $D_{10}$ ($\mu$m) | $D_{90}$ ($\mu$m) | Content (mass%) | $D_{10}$ ($\mu$m) | $D_{90}$ ($\mu$m) | Content (mass%) |
| 1 | PE | IO1 | 0.01 | 0.04 | 30 | - | - | - | - | 0.01 | 0.04 | 30 |
| 2 | PE | IO2 | 0.03 | 0.07 | 30 | - | - | - | - | 0.03 | 0.07 | 30 |
| 3 | PE | IO3 | 0.07 | 0.18 | 30 | - | - | - | - | 0.07 | 0.18 | 30 |
| 4 | PE | IO4 | 0.12 | 0.27 | 30 | - | - | - | - | 0.12 | 0.27 | 30 |
| 5 | PE | IO5 | 0.17 | 0.35 | 30 | - | - | - | - | 0.17 | 0.35 | 30 |
| 6 | PE | IO6 | 0.24 | 0.48 | 30 | - | - | - | - | 0.24 | 0.48 | 30 |
| 7 | PE | IO7 | 0.39 | 0.65 | 30 | - | - | - | - | 0.39 | 0.65 | 30 |
| 8 | PE | IO8 | 0.48 | 0.79 | 30 | - | - | - | - | 0.48 | 0.79 | 30 |
| 9 | PE | IO9 | 0.008 | 0.07 | 30 | - | - | - | - | 0.008 | 0.07 | 30 |
| 10 | PE | IO3 | 0.07 | 0.18 | 8 | - | - | - | - | 0.07 | 0.18 | 8 |
| 11 | PE | IO3 | 0.07 | 0.18 | 15 | - | - | - | - | 0.07 | 0.18 | 15 |
| 12 | PE | IO3 | 0.07 | 0.18 | 55 | - | - | - | - | 0.07 | 0.18 | 55 |
| 13 | PE | IO3 | 0.07 | 0.18 | 70 | - | - | - | - | 0.07 | 0.18 | 70 |

EP 3 170 658 B1

Materials 2-7, 11, 12 are according to the invention.

[Table 2]

EP 3 170 658 B1

Table 2

| Overcoat Coating Material No. | Resin | Particle 1 | | | | Particle 2 | | | | Particle | | |
|---|---|---|---|---|---|---|---|---|---|---|---|---|
| | | Kind | $D_{10}$ ($\mu$m) | $D_{90}$ ($\mu$m) | Content (mass%) | Kind | $D_{10}$ ($\mu$m) | $D_{90}$ ($\mu$m) | Content (mass%) | $D_{10}$ ($\mu$m) | $D_{90}$ ($\mu$m) | Content (mass%) |
| 14 | PE | IO3 | 0.07 | 0.18 | 5 | TO1 | 0.006 | 0.03 | 25 | 0.008 | 0.16 | 30 |
| 15 | PE | IO3 | 0.07 | 0.18 | 5 | TO2 | 0.08 | 0.15 | 25 | 0.09 | 0.22 | 30 |
| 16 | PE | IO3 | 0.07 | 0.18 | 5 | TO3 | 0.25 | 0.47 | 25 | 0.11 | 0.41 | 30 |
| 17 | PE | IO3 | 0.07 | 0.18 | 5 | TO4 | 0.32 | 2.75 | 25 | 0.25 | 2.58 | 30 |
| 18 | PE | IO3 | 0.07 | 0.18 | 3 | TO2 | 0.08 | 0.15 | 4 | 0.08 | 0.17 | 7 |
| 19 | PE | IO3 | 0.07 | 0.18 | 30 | TO2 | 0.08 | 0.15 | 40 | 0.08 | 0.17 | 70 |
| 20 | PE | IO3 | 0.07 | 0.18 | 30 | TO1 | 0.006 | 0.03 | 0.2 | 0.02 | 0.14 | 30.2 |
| 21 | PE | IO3 | 0.07 | 0.18 | 30 | SI | 1 | 2.50 | 2 | 0.02 | 0.22 | 32 |
| 22 | PE | IO3 | 0.07 | 0.18 | 5 | ICO1 | 0.16 | 0.37 | 25 | 0.13 | 0.35 | 30 |
| 23 | PE | IO3 | 0.07 | 0.18 | 5 | ICO2 | 0.22 | 0.58 | 25 | 0.14 | 0.52 | 30 |
| 24 | PE | IO3 | 0.07 | 0.18 | 5 | ICO3 | 0.45 | 1.20 | 25 | 0.14 | 1.15 | 30 |
| 25 | PE | IO3 | 0.07 | 0.18 | 20 | BS1 | 0.11 | 0.24 | 10 | 0.09 | 0.22 | 30 |
| 26 | PE | IO3 | 0.07 | 0.18 | 20 | BS2 | 0.33 | 0.90 | 10 | 0.13 | 0.75 | 30 |
| 27 | PE | IO3 | 0.07 | 0.18 | 20 | CC1 | 0.21 | 0.38 | 10 | 0.12 | 0.26 | 30 |
| 28 | PE | IO3 | 0.07 | 0.18 | 20 | CC2 | 0.52 | 1.85 | 10 | 0.14 | 1.65 | 30 |
| 29 | PE | Qui | 0.03 | 0.15 | 30 | - | - | - | - | 0.03 | 0.15 | 30 |
| 30 | PE | Pht | 0.03 | 0.18 | 20 | TO2 | 0.08 | 0.15 | 10 | 0.05 | 0.16 | 30 |
| 31 | PE | Per | 0.45 | 1.20 | 20 | TO2 | 0.08 | 0.15 | 10 | 0.16 | 0.8 | 30 |
| 32 | PEU | IO3 | 0.07 | 0.18 | 30 | - | - | - | - | 0.07 | 0.18 | 30 |

13

Materials 25, 27, 29, 30, 32 are according to the invention.

[Fabrication of Coated Metal Sheet 1]

A hot-dip 55% Al-Zn alloy-plated steel sheet having a both-side deposition amount of 150 g/m$^2$ was alkali-degreased. Then, on the surface of the plated steel sheet, as a pre-coating treatment, the following non-chromate anti-rust treatment liquid at 20°C was applied, and the plated steel sheet was dried at 100°C without being washed with water to thereby obtain a non-chromate anti-rust-treated plated steel sheet (chemical conversion steel sheet) having a deposition amount by the non-chromate anti-rust treatment of 10 mg/m$^2$ in terms of Ti.

(Non-chromate anti-rust treatment liquid)

| | |
|---|---|
| Hexafluorotitanic acid | 55 g/L |
| Hexafluorozirconic acid | 10 g/L |
| Aminomethyl-substituted polyvinylphenol | 72 g/L |
| Water | balance |

Then, on the chemical conversion surface, a chromate-free undercoat coating material having the following composition was applied; and the chemical conversion steel sheet was heated so that the attained temperature of the plated steel sheet became 200°C to thereby obtain the chemical conversion steel sheet (coated base sheet) having an undercoat coating film having a dry film thickness of 5 $\mu$m. The following anti-rust pigment was LF Bosei PM-300 (manufactured by Kikuchi Color Co., Ltd.). The undercoat coating film assumed white.

(Chromate-free undercoat coating material)

| | |
|---|---|
| Anti-rust pigment | 25mass% |
| Barium sulfate | 15mass% |
| Silica | 3mass% |
| Epoxy-based clear coating material | balance |

Then, on the surface of the coated base sheet, overcoat coating material 1 was applied; and the coated base sheet was heated so that the attained temperature of the plated steel sheet became 220°C to thereby fabricate an overcoat coating film having a dry film thickness T of 15 $\mu$m. Coated metal sheet 1 was thus obtained. The mirror glossiness at 60 degrees $G_{60}$ of coated metal sheet 1 was measured by using a glossmeter VG-2000, manufactured by Nippon Denshoku Industries Co., Ltd., and was 92. Further the L value in the Hunter's Lab color space of coated metal sheet 1 was measured by using "CM3700d", manufactured by Konica Minolta Optics, Inc., and was 34.

[Fabrication of Coated Metal Sheets 2 to 31]

Coated metal sheets 2 to 31 were fabricated in a similar manner to coated metal sheet 1, except for using overcoat coating materials 2 to 31 in place of overcoat coating material 1, respectively.

The $G_{60}$ of coated metal sheet 2 was 89, and the L value thereof was 30. The $G_{60}$ of coated metal sheet 3 was 88, and the L value thereof was 27. The $G_{60}$ of coated metal sheet 4 was 88, and the L value thereof was 26. The $G_{60}$ of coated metal sheet 5 was 86, and the L value thereof was 25. The $G_{60}$ of coated metal sheet 6 was 86, and the L value thereof was 23. The $G_{60}$ of coated metal sheet 7 was 85, and the L value thereof was 22. The $G_{60}$ of coated metal sheet 8 was 85, and the L value thereof was 20. The $G_{60}$ of coated metal sheet 9 was 88, and the L value thereof was 27.

Further the $G_{60}$ of coated metal sheet 10 was 104, and the L value thereof was 38. The $G_{60}$ of coated metal sheet 11 was 89, and the L value thereof was 27. The $G_{60}$ of coated metal sheet 12 was 86, and the L value thereof was 27. The $G_{60}$ of coated metal sheet 13 was 80, and the L value thereof was 26. The $G_{60}$ of coated metal sheet 14 was 88, and the L value thereof was 58. The $G_{60}$ of coated metal sheet 15 was 88, and the L value thereof was 65. The $G_{60}$ of coated metal sheet 16 was 84, and the L value thereof was 62. The $G_{60}$ of coated metal sheet 17 was 83, and the L value thereof was 60.

Further the $G_{60}$ of coated metal sheet 18 was 102, and the L value thereof was 37. The $G_{60}$ of coated metal sheet 19 was 78, and the L value thereof was 35. The $G_{60}$ of coated metal sheet 20 was 88, and the L value thereof was 30. The $G_{60}$ of coated metal sheet 21 was 62, and the L value thereof was 28. The $G_{60}$ of coated metal sheet 22 was 84, and the L value thereof was 25. The $G_{60}$ of coated metal sheet 23 was 82, and the L value thereof was 18. The $G_{60}$ of coated metal sheet 24 was 78, and the L value thereof was 22.

Further the $G_{60}$ of coated metal sheet 25 was 88, and the L value thereof was 36. The $G_{60}$ of coated metal sheet 26 was 83, and the L value thereof was 35. The $G_{60}$ of coated metal sheet 27 was 88, and the L value thereof was 32. The $G_{60}$ of coated metal sheet 28 was 76, and the L value thereof was 30. The $G_{60}$ of coated metal sheet 29 was 94, and the L value thereof was 32. The $G_{60}$ of coated metal sheet 30 was 90, and the L value thereof was 18. The $G_{60}$ of coated metal sheet 31 was 82, and the L value thereof was 45.

[Fabrication of Coated Metal Sheet 32]

Coated metal sheet 32 was obtained in a similar manner to coated metal sheet 3, except for using a stainless steel (SUS304, surface finish: 2B) sheet in place of the hot-dip 55% Al-Zn alloy-plated steel sheet. The $G_{60}$ of coated metal sheet 32 was 96, and the L value thereof was 27.

[Fabrication of Coated Metal Sheet 33]

Coated metal sheet 33 was obtained in a similar manner to coated metal sheet 3, except for using a hot-dip Zn-6% Al-3% Mg alloy-plated steel sheet in place of the hot-dip 55% Al-Zn alloy-plated steel sheet. The $G_{60}$ of coated metal sheet 33 was 86, and the L value thereof was 27.

[Fabrication of Coated Metal Sheet 34]

Coated metal sheet 34 was obtained in a similar manner to coated metal sheet 3, except for using a chromate anti-rust treatment liquid in place of the non-chromate anti-rust treatment liquid, and applying the chromate anti-rust treatment liquid on the hot-dip 55% Al-Zn alloy-plated steel sheet so as to obtain the deposition amount of 20 mg/m$^2$ in terms of chromium. The $G_{60}$ of coated metal sheet 34 was 88, and the L value thereof was 27. Here, the chromate anti-rust treatment liquid was "SURFCOAT NRC300NS" manufactured by Nippon Paint Co., Ltd. ("SURFCOAT" is a registered trademark of the company).

[Fabrication of Coated Metal Sheet 35]

Coated metal sheet 35 was obtained in a similar manner to coated metal sheet 3, except for using the following chromate-containing undercoat coating material in place of the chromate-free undercoat coating material. The $G_{60}$ of coated metal sheet 35 was 89, and the L value thereof was 27.

(Chromate-containing undercoat coating material)

| | |
|---|---|
| Strontium chromate | 25mass% |
| Barium sulfate | 15mass% |
| Silica | 3mass% |
| Epoxy-based clear coating material | balance |

[Fabrication of Coated Metal Sheet 36]

Coated metal sheet 36 was obtained in a similar manner to coated metal sheet 3, except for using overcoat coating material 32 in place of overcoat coating material 3. The $G_{60}$ of coated metal sheet 36 was 92, and the L value thereof was 27.

[Evaluations]

For coated metal sheets 1 to 36 each, the following measurements and tests were carried out.

(1) Coloration

The color tone of the overcoat coating film of coated metal sheets 1 to 36 each was visually observed, judged, and evaluated according to the following criteria.
G: a desired color tone was sufficiently and uniformly observed.
NG: the color tone of the undercoat coating film was felt through the overcoat coating film, or the color tone was felt nonuniform.

(2) Processability

Coated metal sheets 1 to 36 were each subjected to a 0T bending (180° closely contact) processing with the overcoat coating film being as the surface, and the 0T-bent section of the overcoat coating film was subjected to a cellophane tape-peeling test, and evaluated according to the following criteria.
G: portions having peeled in the 0T-bent section were less than 50%.
NG: portions having peeled in the 0T-bent section were 50% or more.

(3) Weather Resistance

Coated metal sheets 1 to 36 were each subjected to an accelerated weathering test under the following condition by using a sunshine Weather Meter ("S80DH", manufactured by Suga Test Instruments Co., Ltd.) according to the sunshine carbon arc lamp-type weathering test prescribed in JIS D0205.

(Test condition)

Illuminance: 255 W/m$^2$
Irradiation time: 480 hours
Black panel temperature: 80°C
With respect to the colors of the overcoat coating film of coated metal sheets 1 to 36 each before and after the above test, there were determined the L value, the a value and the b value ($L_1$, $a_1$, $b_1$) of the coated metal sheet before the test in the Hunter's Lab color space, and the L value, the a value and the b value ($L_2$, $a_2$, $b_2$) of the coated metal sheet after the test by using a spectrocolorimeter "CM3700d", manufactured by Konica Minolta Optics, Inc., and the color difference ΔE represented by the following equation was determined.

$$\Delta E = \{(L_1 - L_2)^2 + (a_1 - a_2)^2 + (b_1 - b_2)^2\}^{1/2}$$

Then, by using the ΔE, the weather resistance of coated metal sheets 1 to 36 each was evaluated according to the following criteria.

A: ΔE was 8 or lower.
B: ΔE was higher than 8 and 10 or lower.
C: ΔE was higher than 10 and 12 or lower.
D: ΔE was higher than 12.

The evaluation results of the $G_{60}$, the L value, the coloration, the processability and the weather resistance of coated metal sheets 1 to 36 each are shown in Table 3 and Table 4. Here, for coated metal sheets 1, 10 and 18, since the coloration was insufficient and the color tone of the undercoat coating film was felt through, no weathering test was carried out.

[Table 3]

Table 3

| Coated Metal Sheet No. | Overcoat Coating Material No. | Appearance | | Evaluations | | | |
|---|---|---|---|---|---|---|---|
| | | $G_{60}$ (-) | L value (-) | Coloration | Processability | Weather Resistance | |
| | | | | | | $\Delta E$ (-) | Judgment |
| 1 | 1 | 92 | 34 | NG | G | - | - |
| 2 | 2 | 89 | 30 | G | G | 6.5 | A |
| 3 | 3 | 88 | 27 | G | G | 6.6 | A |
| 4 | 4 | 88 | 26 | G | G | 7.4 | A |
| 5 | 5 | 86 | 25 | G | G | 7.8 | A |
| 6 | 6 | 86 | 23 | G | G | 8.5 | B |
| 7 | 7 | 85 | 22 | G | G | 11.2 | C |
| 8 | 8 | 85 | 20 | G | G | 12.5 | D |
| 9 | 9 | 88 | 27 | G | G | 6.8 | A |
| 10 | 10 | 104 | 38 | NG | G | - | - |
| 11 | 11 | 89 | 27 | G | G | 6.8 | A |
| 12 | 12 | 86 | 27 | G | G | 7.5 | A |
| 13 | 13 | 80 | 26 | G | NG | 7.8 | A |
| 14 | 14 | 88 | 58 | G | G | 3.2 | A |
| 15 | 15 | 88 | 65 | G | G | 3.6 | A |
| 16 | 16 | 84 | 62 | G | G | 4.4 | A |
| 17 | 17 | 83 | 60 | G | G | 12.4 | D |
| 18 | 18 | 102 | 37 | NG | G | - | - |
| 19 | 19 | 78 | 35 | G | NG | 7.8 | A |
| 20 | 20 | 88 | 30 | G | G | 6.7 | A |
| 21 | 21 | 62 | 28 | G | G | 7.4 | A |

[Table 4]

Table 4

| Coated Metal Sheet No. | Overcoat Coating Material No. | Appearance | | Evaluations | | | |
|---|---|---|---|---|---|---|---|
| | | $G_{60}$ (-) | L value (-) | Coloration | Processability | Weather Resistance | |
| | | | | | | $\Delta E$ (-) | Judgment |
| 22 | 22 | 84 | 25 | G | G | 7.8 | A |
| 23 | 23 | 82 | 18 | G | G | 11.4 | C |
| 24 | 24 | 78 | 22 | G | G | 14.5 | D |
| 25 | 25 | 88 | 36 | G | G | 6.4 | A |
| 26 | 26 | 83 | 35 | G | G | 12.5 | D |
| 27 | 27 | 88 | 32 | G | G | 6.1 | A |
| 28 | 28 | 76 | 30 | G | G | 13.2 | D |

(continued)

| Coated Metal Sheet No. | Overcoat Coating Material No. | Appearance | | Evaluations | | | |
|---|---|---|---|---|---|---|---|
| | | G$_{60}$ (-) | L value (-) | Coloration | Processability | Weather Resistance | |
| | | | | | | $\Delta$E (-) | Judgment |
| 29 | 29 | 94 | 32 | G | G | 7.2 | A |
| 30 | 30 | 90 | 18 | G | G | 7.7 | A |
| 31 | 31 | 82 | 45 | G | G | 12.2 | D |
| 32 | 3 | 96 | 27 | G | G | 6.8 | A |
| 33 | 3 | 86 | 27 | G | G | 6.5 | A |
| 34 | 3 | 88 | 27 | G | G | 6.6 | A |
| 35 | 3 | 89 | 27 | G | G | 6.7 | A |
| 36 | 32 | 92 | 27 | G | G | 7.2 | A |

As is clear from Table 3 and Table 4, any of coated metal sheets 2 to 7, 11, 12, 25, 27, 29, 30 and 32 to 36 was good in the coloration and the processability, and sufficient in the weather resistance. This is conceivably because since a sufficient amount (10 to 60mass% to the overcoat coating film) of particles having sizes large enough to assume a desired color tone (D$_{90}$ was 0,07 to 0.70 $\mu$m) was contained in the overcoat coating film being the outermost-layer coating film although the particles were sufficiently small, even if the overcoat coating film became lean due to the photodeterioration, the smooth surface state of the overcoat coating film was not impaired.

Particularly as is clear, for example, from coated metal sheets 2 to 7, it is clear that it was more effective that the D$_{90}$ of the particles in the overcoat coating film was 0,07 to 0.50 $\mu$m, and it was still more effective that the D$_{90}$ was 0,07 to 0.40 $\mu$m, from the viewpoint of enhancing the weather resistance of the coated metal sheet.

Further although either of coated metal sheets 9 and 14 was excellent in the coloration, the processability and the weather resistance, the dispersibility of the particles in the preparation of overcoat coating materials 9 and 14 was poorer than the other overcoat coating materials, and the preparation of overcoat coating materials 9 and 14 needed stronger stirring. This is conceivably because the particles in the overcoat coating film were too small. Hence, it is clear that it was still more effective that the D$_{10}$ of the particles in the overcoat coating film was 0.01 $\mu$m or larger, from the viewpoint of enhancing the productivity of the colored coated metal sheet.

Further although either of coated metal sheets 29 and 30 was excellent in the coloration, the processability and the weather resistance, when the weather resistance evaluation test was carried out longer, the color difference $\Delta$E rose slightly and the evaluation result of the weather resistance varied from A to B in some cases. This is conceivably because the organic pigment particle itself slightly changed its color due to the photodeterioration. Hence, it is clear that it was still more effective that the particles were inorganic pigment particles, from the viewpoint of the long-term stability of desired coloration of the overcoat coating film.

Further as is clear from Table 2 and Table 3, coated metal sheet 21, though containing a very small amount of particles (gloss adjusting agent) larger than the D$_{90}$ of the particles contained in the overcoat coating film, was excellent in any of the coloration, the processability and the weather resistance. This is conceivably because since the gloss adjusting agent was dispersed in a very small amount in the overcoat coating film, the surface state of the overcoat coating film was not affected to such a degree that a significant difference developed in the color difference $\Delta$E in the evaluation test for weather resistance, and because the particle diameter of the gloss adjusting agent was small enough to the film thickness of the overcoat coating film. Hence, it is clear that the particles in the overcoat coating film were allowed to contain particles larger than the D$_{90}$ as long as the particles were in such sizes and amounts that the D$_{90}$ became smaller than the above-mentioned upper limit value of 0.70 $\mu$m.

Further as is clear from Table 2 and Table 3, coated metal sheet 20, though containing a very small amount of particles smaller than the D$_{10}$ of the particles contained in the overcoat coating film, was excellent in any of the coloration, the processability and the weather resistance. This is conceivably because when particles having certain sizes were contained in a sufficient amount in the overcoat coating film, even if particles having a D$_{10}$ of smaller than 0,03 $\mu$m were further contained, such smaller particles did not substantially affect the coloration, the processability and the weather resistance. Hence, it is clear that the particles in the overcoat coating film were allowed to contain particles smaller than the D$_{10}$ as long as the particles were in such sizes and amounts that the D$_{10}$ became larger than 0,03 $\mu$m.

Further, for example, as is clear from comparison of coated metal sheet 3 with coated metal sheet 29, the particles (coloring pigment) in the overcoat coating film may have been inorganic pigment particles or organic pigment particles. Further, for example, as is clear from comparison of coated metal sheet 15 with coated metal sheet 30, the coloring pigment may have been the (blue) coloring pigment other than red ones.

Further, for example, as is clear from coated metal sheets 32 to 36, irrespective of the kinds of the metal sheets, the kinds of the chemical conversion films and the kinds of the undercoat coating films, there were obtained the coated metal sheets excellent in the coloration, the processability and the weather resistance, and it is also clear that when the resin in the overcoat coating film was a polyester-based resin, that is, not only when the polyester-based resin was a polyester alone but also even when being a polyester urethane, the coated metal sheets obtained were excellent in the coloration, the processability and the weather resistance.

Meanwhile, coated metal sheet 1 was insufficient in the coloration. This is conceivably because the $D_{90}$ of the particles (coloring pigment) in the overcoat coating film was too small and there could not be obtained sufficient coloring of the overcoat coating film by the particles.

Further coated metal sheet 8 was insufficient in the weather resistance. This is conceivably because fine ruggedness by the particles was formed on the surface of the overcoat coating film and affected the color difference ∆E as the photodeterioration of the overcoat coating film since the particles in the overcoat coating film were too large.

Further coated metal sheet 10 was insufficient in the coloration. This is conceivably because the content of the particles (coloring pigment) in the overcoat coating film was too low and there could not be obtained sufficient coloring of the overcoat coating film by the particles.

Further coated metal sheet 13 was insufficient in the processability. This is conceivably because the content of the particles (coloring pigment) in the overcoat coating film was too high and there could not be obtained sufficient adhesiveness of the overcoat coating film with the undercoat coating film.

Further coated metal sheet 17 was insufficient in the weather resistance; coated metal sheet 18 was insufficient in the coloration; and coated metal sheet 19 was insufficient in the processability. The insufficiency of the weather resistance of coated metal sheet 17 is, as in coated metal sheet 8, conceivably because the particles in the overcoat coating film were too large and affected the ∆E of the overcoat coating film. The insufficiency of coated metal sheet 18 is, as in coated metal sheet 1, conceivably because the particles in the overcoat coating film were too small and there could not be obtained sufficient coloring of the overcoat coating film by the particles. The insufficiency of coated metal sheet 19 is, as in coated metal sheet 13, conceivably because the content of the particles in the overcoat coating film was too high and there could not be obtained sufficient adhesiveness of the overcoat coating film with the undercoat coating film.

Further any of coated metal sheets 24, 26, 28 and 31 was insufficient in the weather resistance. This is, as in coated metal sheets 8 and 17, conceivably because the particles in the overcoat coating film were too large and affected the ∆E of the overcoat coating film.

[Explanation of Preliminary Experiment]

Here, finally, the results of a preliminary experiment which investigated the influence of the particle diameter of the coloring pigment exposed associated with the photodeterioration will be shown. In the preparatory experiment, commercially available colcothars (red iron oxide particles) 1 to 5 having different particle diameters were dispersed in such an amount that the content of the colcothar in a coating film became 30mass%, in a polyester-based clear coating material, and red colored coating films were formed on base sheets to thereby obtain samples 1 to 5 of coated metal sheets, respectively. Then, samples 1 to 5 of coated metal sheets were each subjected to the accelerated weathering test under the above condition.

Sample 1 of coated metal sheet had colcothar 1, and the $D_{90}$ of colcothar 1 was 0.09 $\mu$m. Sample 2 of coated metal sheet had colcothar 2, and the $D_{90}$ of colcothar 2 was 0.12 $\mu$m. Sample 3 of coated metal sheet had colcothar 3, and the $D_{90}$ of colcothar 3 was 0.17 $\mu$m. Sample 4 of coated metal sheet had colcothar 4, and the $D_{90}$ of colcothar 4 was 0.30 $\mu$m. Sample 5 of coated metal sheet had colcothar 5, and the $D_{90}$ of colcothar 5 was 0.40 $\mu$m.

Then, the color difference ∆E and the surface roughness (ten-point average roughness (Rz)) of the samples of coated metal sheets were measured. Relationships between the test time and the color difference ∆E are shown in FIG. 1A, and relationships between the test time and the surface roughness Rz are shown in FIG. 1B. Here, in FIG. 1A and FIG. 1B, sample 1 of coated metal sheet is indicated by black circle (●); sample 2 of coated metal sheet is indicated by white circle (○); sample 3 of coated metal sheet is indicated by black triangle (▲); sample 4 of coated metal sheet is indicated by white triangle (△); and sample 5 of coated metal sheet is indicated by black square (■).

As is clear from FIG. 1A, when the $D_{90}$ of the colcothar became larger, also the color difference ∆E became larger. Further in any of samples 1 to 5 of coated metal sheets, the color difference ∆E sharply rose until 120 hours, thereafter gently rose, reached the top at 240 hours, and thereafter, was constant or slightly decreased. The 240 hours in the accelerated weathering test corresponded to an outdoor exposure time of about five years. Hence, it is clear that the color difference ∆E due to the color change and fading increased for about five years from the exposure initiation, but thereafter, exhibited such a manner that the color difference ΔE did not increase and became constant.

Further as is clear from FIG. 1B, the smaller the $D_{90}$ of the colcothar, more rectilinear and smaller the change in Rz; and the larger the $D_{90}$ of the colcothar, the more exponential and larger the change in Rz. Hence, it is clear that the resin of the surface and its vicinity of the colored coating film was decomposed by ultraviolet rays and the coloring pigment was exposed on the surface of the colored coating film, and consequently, the surface roughness of the colored coating film became larger. Here, the reason for the exponential change is conceivably because, with the colcothar having a larger $D_{90}$, although the proportion of the increase in the exposure amount of the colcothar to the reduction of the thickness of the coating film increases in the early stage of the thickness reduction of the coating film, the exposure amount becomes substantially nearly constant when the thickness of the coating film is reduced to some degree, since the distribution of the colcothar in the plane direction of the coating film is nearly constant.

From the above results, it is clear that the increase in the surface roughness of the colored coating film due to the exposure of the coloring pigment associated with the photodeterioration of the colored coating film affects the reflection of light at the colored coating film and raises the luminosity of the appearance of the colored coating film (making the blushing appearance).

Industrial Applicability

In the colored coated metal sheet according to the present invention, there is prevented the decrease in the designability associated with the photodeterioration of the resin in the overcoat coating film. Hence, there can be provided a coated metal sheet assuming the desired designability over a long period even if being used for exterior applications over a long period. Therefore, there can be expected a further promotion of utilization of the coated metal sheet excellent in the designability, according to the present invention.

**Claims**

1.  An exterior building material comprising a colored coated metal sheet,
    wherein the colored coated metal sheet comprises: a metal sheet, and one or more coating films disposed thereon,
    the colored coated metal sheet has a mirror glossiness at 60 degrees of 60 to 100 and an L value in the Hunter's Lab color space of 70 or lower,
    an outermost-layer coating film among the coating films comprises a polyester and a particle containing a coloring pigment,
    a $D_{90}$ of the particle is 0.07 to 0.70 μm, and
    a D10 of the particle is 0.03 μm or more, and
    a content of the particle in the outermost-layer coating film is 10 to 60 mass%.

2.  The exterior building material according to claim 1, wherein the $D_{90}$ of the particle is 0.07 to 0.50 μm.

3.  The exterior building material according to claim 1, wherein the $D_{90}$ of the particle is 0.07 to 0.40 μm.

4.  The exterior building material according to any one of claims 1 to 3, wherein the coloring pigment is an inorganic pigment.

5.  The exterior building material according to any one of claims 1 to 4, wherein the particle comprises one or more selected from the group consisting of iron oxide particles, titanium oxide particles, composite oxide particles, barium sulfate particles and calcium carbonate particles.

6.  The exterior building material according to any one of claims 1 to 5,
    wherein the colored coated metal sheet further comprises a chemical conversion film layer disposed on a surface of the metal sheet.

**Patentansprüche**

1.  Außenbaustoff, umfassend ein farbig beschichtetes Metallblech,
    wobei das farbig beschichtete Metallblech umfasst: ein Metallblech und eine oder mehrere darauf aufgebrachte Beschichtungen, wobei
    das farbig beschichtete Metallblech einen Spiegelglanz bei 60 Grad von 60 bis 100 und einen L-Wert im HunterLab-Farbraum von 70 oder niedriger aufweist,
eine Außenschicht-Beschichtung unter den Beschichtungen ein Polyester und ein Teilchen umfasst, das ein Farbpigment enthält,
ein $D_{90}$ des Teilchens 0,07 bis 0,70 $\mu$m beträgt, und
ein $D_{10}$ des Teilchens 0,03 $\mu$m oder mehr beträgt, und
ein Massenanteil des Teilchens in der Außenschicht-Beschichtung 10 bis 60 % beträgt.

2. Außenbaustoff nach Anspruch 1, wobei der $D_{90}$ des Teilchens 0,07 bis 0,50 $\mu$m beträgt.

3. Außenbaustoff nach Anspruch 1, wobei der $D_{90}$ des Teilchens 0,07 bis 0,40 $\mu$m beträgt.

4. Außenbaustoff nach einem beliebigen der Ansprüche 1 bis 3, wobei das Farbpigment ein anorganisches Pigment ist.

5. Außenbaustoff nach einem beliebigen der Ansprüche 1 bis 4, wobei das Teilchen eins oder mehrere aus der Gruppe gewählte umfasst, bestehend aus Eisenoxidteilchen, Titanoxidteilchen, zusammengesetzten Oxidteilchen, Bariumsulfatteilchen und Kalziumkarbonatteilchen.

6. Außenbaustoff nach einem beliebigen der Ansprüche 1 bis 5, wobei das farbig beschichtete Metallblech weiter eine chemische Umwandlungsschicht umfasst, angeordnet auf einer Oberfläche des Metallblechs.

**Revendications**

1. Matériau de construction extérieur comprenant une tôle métallique revêtue colorée,
dans lequel la tôle métallique revêtue colorée comprend :
une tôle métallique et une ou plusieurs pellicule de revêtement disposées sur celle-ci,

la tôle métallique revêtue colorée a une brillance miroir à 60 degrés de 60 à 100 et une valeur L dans l'espace colorimétrique du Hunter Lab de 70 ou moins,
une pellicule de revêtement de la couche la plus externe parmi les pellicules de revêtement comprend un polyester et une particule contenant un pigment colorant,
un $D_{90}$ de la particule est de 0,07 à 0,70 $\mu$m, et
un $D_{10}$ de la particule est de 0,03 $\mu$m ou plus, et
une teneur de la particule dans la pellicule de revêtement de la couche la plus externe est de 10 à 60 % en masse.

2. Matériau de construction extérieur selon la revendication 1, dans lequel le $D_{90}$ de la particule est de 0,07 à 0,50 $\mu$m.

3. Matériau de construction extérieur selon la revendication 1, dans lequel le $D_{90}$ de la particule est de 0,07 à 0,40 $\mu$m.

4. Matériau de construction extérieur selon l'une quelconque des revendications 1 à 3, dans lequel le pigment colorant est un pigment inorganique.

5. Matériau de construction extérieur selon l'une quelconque des revendications 1 à 4, dans lequel la particule contient une ou plusieurs particules sélectionnée dans le groupe consistant en particules d'oxyde de fer, particules d'oxyde de titane, particules d'oxyde composite, particules de sulfate de baryum et particules de carbonate de calcium.

6. Matériau de construction extérieur selon l'une quelconque des revendications 1 à 5, dans lequel la tôle métallique revêtue colorée comprend en outre une couche de pellicule de conversion chimique disposée sur une surface de la tôle métallique.

FIG. 1A

FIG. 1B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012086505 A
- JP 2008149584 A

- WO 201274044 A